# FASCICULE DE BREVET EUROPEEN

(11) **EP 2 104 715 B1**
(45) Date de publication et mention de la délivrance du brevet: **20.03.2019**
(21) Numéro de dépôt: 07859061.9
(22) Date de dépôt: 11.12.2007
(51) Int. Cl.: C09C 3/10, C09C 1/02, C09C 1/04, C09C 1/24, C09C 1/00

(54) **PROCEDE DE FABRICATION D'UNE POUDRE D'OXYDE ET D'HYDROXYDE METALLIQUE AUTODISPERSABLE DANS L'EAU, POUDRE ET SON UTILISATION**
VERFAHREN ZUR HERSTELLUNG EINES IN WASSER SELBSTDISPERGIERFÄHIGEN METALLOXID- UND -HYDROXIDPULVERS, SO ERHALTENES PULVER SOWIE DESSEN VERWENDUNG
METHOD FOR PRODUCING A WATER SELF DISPERSIBLE METALLIC OXIDE AND HYDROXIDE POWDER, POWDER AND USES THEREOF

(30) Priorité: 09.01.2007 FR 0700086
(43) Date de publication de la demande: 30.09.2009
(73) Titulaire: COATEX, 69730 Genay (FR)
(72) Inventeur: KENSICHER, Yves, F-69620 Theize (FR); MORO, Jean, F-01600 Saint Didier de Formans (FR); SUAU, Jean-Marc, F-69480 Lucenay (FR)
(86) Numéro de dépôt international: PCT/IB2007/003933
(87) Numéro de publication internationale: WO 2008/084317

(56) Documents cités:
- EP-A1- 0 594 332
- EP-A2- 0 751 189
- WO-A1-2006/050567
- US-A- 4 818 783

## Description

La présente invention se rapporte au domaine des procédés de mise en dispersion aqueuse d'hydroxydes métalliques, tels que préférentiellement les hydroxydes de calcium et de magnésium qui sont notamment utilisés comme agent de neutralisation chimique.

La Demanderesse indique que dans la présente Demande, le terme métal désigne un élément chimique qui peut former des liaisons métalliques et perdre des électrons pour former des cations (ions positifs) et former des liaisons ioniques dans le cas des alcalins. Dans le tableau périodique des éléments, la diagonale partant de l'aluminium et allant jusqu'au bismuth sépare les éléments métalliques (en bas à gauche de cette diagonale ainsi que les éléments de la diagonale) des éléments non métalliques (en haut à droite de la diagonale).

La fabrication de dispersions et de suspensions aqueuses contenant un hydroxyde métallique, et ce à partir d'un oxyde métallique, correspond à la réaction d'hydratation de l'oxyde métallique en vue d'obtenir l'hydroxyde correspondant.

Dans le cas de l'hydroxyde de calcium (Ca(OH)₂) encore dénommé chaux hydratée, et de l'hydroxyde de magnésium (Mg(OH)₂), qui constituent les deux hydroxydes très préférentiels visés par la présente Demande, ceux-ci sont obtenus de manière classique par hydratation de l'oxyde de calcium (CaO) encore dénommée chaux vive, et de l'oxyde de magnésium (MgO), selon les réactions suivantes :

CaO + H₂O → Ca(OH)₂

MgO + H₂O → Mg(OH)₂

L'hydroxyde de calcium et l'hydroxyde de magnésium peuvent être mis en oeuvre comme agent de neutralisation chimique, ce qui leur confère de nombreuses utilisations comme entre autres le traitement des effluents industriels ou domestiques (effluents éventuellement gazeux, telles que les fumées acides), leur utilisation comme additif chimique (c'est-à-dire comme additif participant à une réaction chimique visant à l'obtention d'un produit : c'est par exemple le cas de l'hydroxyde de calcium qui entre en jeu dans la fabrication du stéarate de calcium), ou encore comme produits d'amendement des sols dans le secteur agricole.

Les produits à base d'hydroxyde de calcium et / ou de magnésium se présentent sous diverses formes. L'homme du métier distingue ainsi :
- les poudres : il s'agit de produits secs sous forme pulvérulente ;
- les pâtes plastiques qui présentent une thixotropie élevée ;
- les laits ou dispersions aqueuses.

Au niveau de leur utilisation finale, notamment comme agent de traitement des effluents, ces produits à base d'hydroxyde de calcium et / ou de magnésium sont mis en oeuvre :
- soit par introduction directe de la dispersion aqueuse, de la pâte, ou de la poudre les contenant, dans les effluents aqueux à traiter ;
- soit indirectement, à travers une étape de mise en dispersion dans l'eau de la poudre, ou à travers une étape de dilution de la pâte, en vue d'obtenir une dispersion aqueuse qui est introduite dans les effluents à traiter.

Aussi, l'homme du métier cherche depuis de nombreuses années à faciliter la mise en dispersion dans l'eau de l'hydroxyde de calcium et / ou de magnésium, soit pour faciliter la mise en oeuvre directe de la poudre ou de la pâte ou de la dispersion de ces hydroxydes dans les effluents à traiter, soit pour faciliter l'étape préalable de mise en dispersion de la poudre ou de la pâte d'hydroxyde de calcium et / ou de magnésium, la dispersion aqueuse obtenue étant ensuite introduite dans les effluents à traiter. De manière plus générale, l'homme du métier cherche à améliorer le caractère dispersable des hydroxydes métalliques dans l'eau, lorsqu'il cherche à fabriquer des dispersions aqueuses de tels hydroxydes.

Il connaît à ce titre un certain nombre de documents, basés sur la mise en oeuvre d'agents particuliers appelés "agents dispersants" qui possèdent la capacité d'améliorer l'état de dispersion dans l'eau des hydroxydes métalliques, et notamment de calcium et / ou de magnésium. Concrètement, lorsque ces agents sont introduits dans une suspension aqueuse présentant un pourcentage en poids sec donné d'hydroxyde de calcium et / ou de magnésium, ils conduisent à une viscosité inférieure à celle de la même suspension (ayant la même teneur en poids sec d'hydroxyde de calcium et / ou de magnésium) mais ne contenant pas ledit agent dispersant. L'intérêt de présenter une telle viscosité réduite pour un extrait sec donné, réside notamment dans la possibilité de disposer de dispersions aqueuses suffisamment fluides en vue d'être transportées et notamment pompées.

Ainsi, dans le domaine des dispersants de l'hydroxyde de calcium, l'homme du métier connaît le document EP 0 061 354 A1 qui décrit la mise en oeuvre d'homopolymères de l'acide (méth)acrylique pour fabriquer des dispersions aqueuses de chaux éteinte, avec des applications dans le traitement de l'eau.

Il connaît aussi le document EP 0 313 483 A1 qui décrit un procédé de fabrication d'une dispersion aqueuse de chaux éteinte par broyage dans l'eau de ladite chaux en présence d'un polymère hydrosoluble constitué d'au moins un monomère éthylénique monocarboxylique ayant un poids moléculaire compris entre 200 g/mole et 1 900 g/mole, l'objectif étant ici de combiner l'action de mise en dispersion dans l'eau à celle de réduction de la taille des particules de chaux éteinte.

Il connaît aussi le document FR 2 677 351 qui décrit une dispersion aqueuse de chaux hydratée dont l'extrait sec en chaux hydratée est supérieur à 40 % de son poids total, et qui présente un comportement rhéologique tel que la dispersion obtenue est manipulable (notamment pompable) et stable dans le temps : cet objectif est atteint par la mise en oeuvre comme agent dispersant d'un polyacrylate de métal alcalin ou alcalino-terreux.

Il connaît aussi le document FR 2 687 396 qui décrit une dispersion aqueuse de chaux hydratée, dont l'extrait sec en hydroxyde de calcium est supérieur à 60 % de son poids et dont la viscosité est inférieure à 15 Pa.s : cet objectif est atteint par utilisation d'un polyanion comme agent dispersant, ledit polyanion étant préférentiellement issu de l'acide (méth)acrylique.

Il connaît aussi le document EP 0 594 332 A1 qui décrit la mise en oeuvre comme agent dispersant de la chaux de sels de sodium d'homopolymères et de copolymères de l'acide acrylique, en vue d'obtenir des dispersions aqueuses de chaux vive et de chaux éteinte contenant au moins 20 % en poids sec de matières minérales, manipulables et stables dans le temps. Ce document souligne l'efficacité comme agents dispersants de la chaux éteinte de copolymères anioniques, constitués notamment de plus de 93 % en poids d'acide (méth)acrylique.

Il connaît aussi le document WO 2006 050567 qui décrit l'utilisation de la combinaison de dispersants du type polycarboxylate et du type carbohydrate, pour obtenir des dispersions aqueuses de chaux hydratée présentant une faible viscosité. Ce document souligne notamment que les dispersants du type polycarboxylates, utilisés seuls, constituent déjà de très bons agents dispersants de la chaux hydratée. Il enseigne également que des copolymères de l'acide acrylique avec un monomère polyoxyalkylène sont de très bons dispersants de la chaux éteinte.

Il connaît enfin le document JP 09 122471 qui décrit l'utilisation de copolymères constitués d'un monomère carboxylique et d'un monomère du type (méth)acrylate de polyalkylèneglycol (tel que notamment le méthacrylate de méthoxy polyéthylèneglycol) comme agent dispersant permettant d'obtenir des dispersions aqueuses de chaux éteinte ayant une faible viscosité. Ce document illustre l'utilisation à cet effet d'un copolymère (acide acrylique : méthacrylate de méthoxy polyéthylèneglycol de poids moléculaire égal à 770 g/mole) dans un ratio massique 25 : 75, et dont le poids moléculaire est inférieur à 20 000 g/mole.

Dans le secteur des agents dispersants mis en oeuvre pour disperser dans l'eau de l'hydroxyde de magnésium, l'homme du métier connaît le document JP 59 049835 qui décrit la fabrication de dispersions aqueuses de Mg(OH)₂ grâce à des condensés mélamine-formaldéhyde contenant un radical sulphonyle. Ce document enseigne qu'on peut alors mettre en dispersion dans l'eau jusqu'à 60 % en poids sec d'hydroxyde de magnésium.

Il connaît aussi le document JP 55 167125 qui décrit des polymères de l'acide (méth)acrylique neutralisés, permettant de fabriquer des dispersions aqueuses d'hydroxyde de magnésium ayant un extrait sec au moins égal à 60 % de leur poids, tout en présentant un profil rhéologique compatible avec le transport et la manipulation de telles dispersions.

Il connaît également le document JP 56 073623 qui décrit la mise en dispersion dans l'eau d'hydroxyde de magnésium, à partir de phosphates solubles et de copolymères constitués de 5 % à 65 % en mole d'un monomère hydroxyalkyl(meth)acrylate et de 40 % à 95 % en mole d'un autre monomère à base d'acide carboxylique. On parvient ainsi à fabriquer des dispersions qui sont stables dans le temps, et de faible viscosité.

Aussi, l'ensemble des documents précités repose sur la fabrication de dispersions aqueuses d'hydroxyde de calcium ou de magnésium, par réaction complète entre l'oxyde de départ et l'eau mise en jeu, selon les réactions bien connues de l'homme du métier, et qui s'écrivent à l'équilibre stoechiométrique :

CaO + H₂O → Ca(OH)₂

MgO + H₂O → Mg(OH)₂

Aucun des documents précités ne dévoile ou ne suggère la possibilité de ne réaliser que partiellement les réactions précédentes, en présence d'un polymère hydrosoluble vinylique en émulsion ou en solution aqueuse. De même, la Demanderesse ne connaît aucun document qui dévoile ou suggère la possibilité de n'effectuer que partiellement, en présence d'un polymère hydrosoluble vinylique en émulsion ou en solution aqueuse, la réaction d'hydratation d'un oxyde métallique en vue d'obtenir l'hydroxyde métallique correspondant.

Poursuivant ses recherches en vue d'améliorer le caractère dispersable des hydroxydes métalliques dans l'eau, la Demanderesse a mis au point un nouveau procédé de fabrication d'une poudre à base d'oxydes et d'hydroxydes métalliques, caractérisé :
1) en ce qu'il comprend les étapes de :
   a) fournir au moins un oxyde métallique sous forme de poudre sèche ledit oxyde métallique étant choisi parmi un oxyde de calcium et / ou de magnésium,
   b) traiter ladite poudre avec un polymère sous forme d'une solution et / ou d'une émulsion aqueuse, de manière à ce que la teneur en poids sec d'hydroxyde métallique au sein de ladite poudre traitée soit inférieure à 99 %, préférentiellement à 75 %, très préférentiellement à 50 %, et extrêmement préférentiellement à 10 % de son poids total,
2) et en ce que ledit polymère est un homopolymère ou un copolymère hydrosoluble tel que défini dans la revendication 1.

Le fait que la teneur en hydroxyde métallique au sein de la poudre ne soit pas égale à 100 % du poids total de ladite poudre indique bien que la totalité de l'oxyde de départ n'a pas été transformé en l'hydroxyde métallique correspondant.

La Demanderesse indique que les métaux visés par la présente invention sont le calcium, le magnésium et leurs mélanges.

Aussi, le procédé selon l'invention conduit à un produit constitué d'oxyde et d'hydroxyde métallique, qui est une poudre traitée par un polymère hydrosoluble vinylique sous forme d'émulsion ou de solution aqueuse. De part la présence d'oxyde et d'hydroxyde au sein de ce produit, on parlera dans la suite de la Demande de "poudre mixte".

Par ailleurs, l'avantage du traitement par ledit polymère est de conférer à la poudre mixte ainsi formée un caractère autodispersable dans l'eau : par introduction dans l'eau de cette poudre mixte, on réalise aisément une dispersion aqueuse de ladite poudre, sans ajout complémentaire d'agent dispersant. De part la nature autodispersable de cette poudre mixte, on parlera dans la suite de la Demande de "poudre mixte autodispersable" en vue de désigner le produit objet du procédé de la présente invention. La Demanderesse indique que, si un dispersant supplémentaire n'est pas nécessaire à l'obtention d'une poudre sous forme dispersée dans l'eau, il n'est pas exclu d'ajouter un autre agent dispersant après l'étape b) du procédé selon l'invention.

Un autre avantage de la présente invention, est que la poudre mixte autodispersable telle que décrite auparavant, peut être mise en dispersion dans l'eau de manière à obtenir des dispersions dont l'extrait sec peut être compris environ entre 10 % et 80 % de leurs poids, tout en ayant une viscosité réduite par rapport à la même dispersion mais réalisée sans le polymère mis en oeuvre au cours de l'étape b). L'homme du métier a ainsi la possibilité de fabriquer des dispersions aqueuses d'hydroxyde métallique dont il peut réguler l'extrait sec tout en maintenant la viscosité à une valeur suffisamment faible pour que ladite dispersion reste transportable et notamment pompable.

De plus, ce caractère autodispersable est acquis dès le traitement par ledit polymère vinylique hydrosoluble et se conserve au cours du temps. Ceci signifie que la poudre mixte autodispersable résultant du procédé de l'invention peut être conservée, (c'est-à-dire notamment facilement stockée dans des sacs), ou encore transportée en l'état (c'est-à-dire sous forme de poudre, ce qui représente un gain en teneur de matière minérale transportée par rapport à une suspension aqueuse ou à un lait), ladite poudre conservant son caractère autodispersable dans l'eau : plusieurs jours après le traitement par ledit polymère vinylique hydrosoluble, ladite poudre peut alors être mise aisément en dispersion dans l'eau, sans ajout ultérieur d'agent dispersant. Comme déjà indiqué, l'homme du métier peut néanmoins choisir d'ajouter un autre agent dispersant par la suite (c'est-à-dire après l'étape b) du procédé selon l'invention).

Dans le cas particulier des hydroxydes de calcium et / ou de magnésium qui sont utilisés pour traiter les effluents, on fournit alors à l'homme du métier la possibilité :
- de traiter des effluents par introduction directe d'une poudre mixte et autodispersable selon l'invention qui se dispersera facilement dans la phase aqueuse des effluents à traiter ;
- ou de traiter des effluents par introduction d'une dispersion aqueuse d'hydroxyde de calcium et / ou de magnésium, qui résulte de la mise en dispersion de la poudre mixte autodispersable selon l'invention.

De plus, et de manière tout à fait surprenante dans le cas du calcium et du magnésium, les poudres mixtes autodispersables selon l'invention conduisent à des dispersions aqueuses qui présentent une efficacité neutralisante supérieure à celle d'une dispersion aqueuse selon l'art antérieur : pour obtenir une neutralisation complète des effluents acides, la masse engagée de la dispersion aqueuse obtenue à partir d'une poudre selon l'invention est inférieure à celle d'une dispersion aqueuse obtenue selon l'art antérieur.

Enfin, l'invention s'appliquant aux seuls cas du calcium et / ou du magnésium, ledit polymère vinylique hydrosoluble mis en oeuvre au cours de l'étape b) est un copolymère hydrosoluble tel que défini dans la revendication 1.

De manière tout à fait surprenante, lorsqu'on met en oeuvre de tels copolymères au cours de l'étape b) du procédé selon l'invention, la poudre mixte autodispersable obtenue ne présente pas de retard à l'hydratation par rapport à la même poudre obtenue par mise en oeuvre au cours de l'étape b) de polymères qui ne correspondent pas à la variante préférentielle de l'invention. Ce retard à l'hydratation est un phénomène bien connu de l'homme du métier, qui reflète la cinétique de la réaction d'hydratation entre l'oxyde de calcium et / ou de magnésium et l'eau. Une telle réaction est exothermique : le temps pour lequel la température du milieu réactionnel est maximale correspond au retard à l'hydratation de l'hydroxyde considéré. Moins ce retard est important, plus la réaction est rapide, et plus on réalise rapidement la mise en dispersion dans l'eau de l'hydroxyde de calcium et / ou de magnésium.

En augmentant cette vitesse d'hydratation dans le cadre de la variante préférentielle de l'invention, on facilite la mise en dispersion aqueuse de la poudre. On dispose ainsi d'une poudre :
- mixte (à base d'hydroxyde et d'oxyde de calcium et / ou de magnésium),
- autodispersable dans l'eau (il n'est pas nécessaire d'ajouter un agent dispersant ultérieur pour réaliser la mise en dispersion aqueuse de ladite poudre),
- et dont la vitesse d'hydratation est accrue, ce qui lui confère un caractère autodispersable dans l'eau particulièrement amélioré : la vitesse d'hydratation de cette poudre est augmentée par rapport à la même poudre traitée avec un polymère qui n'appartient pas à la variante préférentielle de l'invention.

Un des mérites de la Demanderesse repose donc sur le fait qu'elle a su mettre au point un procédé de fabrication d'une poudre, qui diffère de la totalité des procédés de l'art antérieur axés sur la fabrication directe de dispersions aqueuses, en ce sens qu'il met en oeuvre une étape de fabrication d'un produit qui est une poudre :
- mixte, constituée d'oxyde et d'hydroxyde métallique,
- traitée à partir du polymère vinylique hydrosoluble en émulsion et / ou en solution aqueuse ce qui lui confère un caractère autodispersable dans l'eau,
- dont l'efficacité neutralisante est améliorée lorsque la poudre est mise en dispersion dans l'eau, par rapport au pouvoir neutralisant des dispersions aqueuses de l'art antérieur, dans le cas du calcium et du magnésium.

Un autre de ses mérites repose sur les recherches qu'elle a menées en vue d'identifier une famille particulière de copolymères vinyliques hydrosolubles contenant au moins un autre monomère non-ionique de formule (I) et qui, utilisés pendant l'étape b) du procédé, permettent d'augmenter la vitesse d'hydratation de l'hydroxyde de calcium et / ou de magnésium : on parvient ainsi à mettre très rapidement en dispersion aqueuse la poudre mixte et autodispersable objet de l'invention.

Aussi, un premier objet de la présente invention est un procédé de fabrication d'une poudre contenant au moins un oxyde et un hydroxyde métallique, caractérisé :
1) en ce qu'il comprend les étapes de :
   a) fournir au moins un oxyde métallique sous forme de poudre sèche, ledit oxyde métallique étant choisi parmi un oxyde de calcium et / ou de magnésium
   b) traiter ladite poudre avec un polymère sous forme d'une solution et / ou d'une émulsion aqueuse, de manière à ce que la teneur en poids sec d'hydroxyde métallique formé soit inférieure à 99 %, préférentiellement à 75 %, très préférentiellement à 50 %, et extrêmement préférentiellement à 10 % du poids total de la poudre ainsi traitée,
2) et en ce que ledit polymère est un copolymère hydrosoluble tel que défini dans la revendication 1.

La Demanderesse précise que dans le préambule donné précédemment, il faut entendre qu'il existe au moins un oxyde et un hydroxyde du même métal.

Le procédé selon l'invention est aussi caractérisé en ce que l'oxyde métallique est choisi parmi les oxydes de calcium, magnésium et leurs mélanges.

Le procédé selon l'invention est aussi caractérisé en ce que le polymère vinylique hydrosoluble mis en oeuvre au cours de l'étape b) est un polymère hydrosoluble contenant au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères.

Le procédé selon l'invention est caractérisé en ce que l'oxyde métallique est un oxyde de calcium et / ou de magnésium, et en ce que le polymère vinylique hydrosoluble mis en oeuvre au cours de l'étape b) est un copolymère vinylique hydrosoluble constitué :
- d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères,
- et d'au moins un monomère non ionique de formule (I), ou des mélanges de plusieurs monomères de formule (I) : 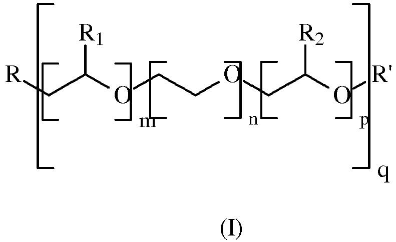 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

Le procédé selon l'invention est aussi caractérisé en ce que ledit copolymère vinylique hydrosoluble mis en oeuvre au cours de l'étape b) est constitué, exprimé en pourcentage en poids de chacun des constituants (la somme des pourcentages en poids de tous les constituants étant égale à 100 %) :
- de 1 % à 20 %, préférentiellement de 2 % à 15 %, très préférentiellement de 3 % à 12 % d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères,
- de 80 % à 99 %, préférentiellement de 85 % à 98 %, très préférentiellement de 88 % à 97 % d'au moins un monomère non ionique de formule (I), ou des mélanges de plusieurs monomères de formule (I) : 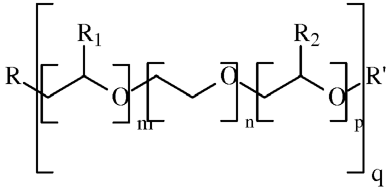 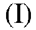 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

De manière générale, le procédé selon l'invention est aussi caractérisé en ce que le polymère vinylique hydrosoluble mis en oeuvre au cours de l'étape b) est totalement ou partiellement neutralisé par au moins un agent de neutralisation, choisi parmi les hydroxydes et / ou oxydes de calcium, de magnésium, de baryum, de lithium, parmi les hydroxydes de sodium, de potassium, ou l'ammoniaque, parmi les amines primaires, secondaires et tertiaires, et leurs mélanges.

De manière générale, le procédé selon l'invention est aussi caractérisé en ce que le polymère vinylique hydrosoluble mis en oeuvre au cours de l'étape b) est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

De manière générale, le procédé selon l'invention est aussi caractérisé en ce que le polymère vinylique hydrosoluble mis en oeuvre au cours de l'étape b) peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.
L'une des phases correspond alors au polymère utilisé selon l'invention.

De manière générale, le procédé selon l'invention est aussi caractérisé en ce qu'il met en oeuvre un agent épaississant pendant et / ou après l'étape b) dudit procédé.

Un autre objet de l'invention réside dans les poudres contenant au moins un oxyde choisi parmi les oxydes de calcium et / ou de magnésium et et au moins l'hydroxyde métallique correspondant, caractérisées :
1) en ce qu'elles présentent une teneur en poids sec d'hydroxyde métallique inférieure à 99 %, préférentiellement à 75 %, très préférentiellement à 50 %, et extrêmement préférentiellement à 10 % de leur poids total,
2) et en ce qu'elles contiennent un polymère qui est un copolymère hydrosoluble tel que défini dans la revendication 1.

La Demanderesse précise que dans le préambule donné précédemment, il faut entendre qu'il existe au moins un oxyde et un hydroxyde du même métal.

Ces poudres sont aussi caractérisées en ce que l'oxyde métallique est choisi parmi les oxydes de calcium, magnésium et leurs mélanges.

Ces poudres sont aussi caractérisées en ce que le polymère vinylique hydrosoluble mis en oeuvre au cours de l'étape b) contient au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères.

Dans les poudres selon l'invention, l'oxyde métallique est un oxyde de calcium et / ou de magnésium, et ledit polymère vinylique hydrosoluble est un copolymère vinylique hydrosoluble constitué :
- d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères,
- et d'au moins un monomère non ionique de formule (I), ou des mélanges de plusieurs monomères de formule (I) : 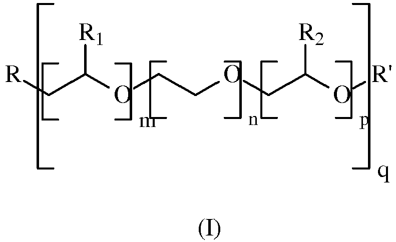 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

Les poudres selon l'invention sont caractérisées en ce que ledit copolymère vinylique hydrosoluble est constitué, exprimé en pourcentage en poids de chacun des constituants (la somme des pourcentages en poids de tous les constituants étant égale à 100 %) :
- de 1 % à 20 %, préférentiellement de 2 % à 15 %, très préférentiellement de 3 % à 12 % d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères,
- de 80 % à 99 %, préférentiellement de 85 % à 98 %, très préférentiellement de 88 % à 97 % d'au moins un monomère non ionique de formule (I), ou des mélanges de plusieurs monomères de formule (I) : 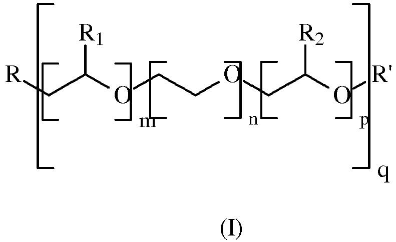 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

De manière générale, les poudres selon l'invention sont caractérisées en ce que le polymère vinylique hydrosoluble mis en oeuvre au cours de l'étape b), est totalement ou partiellement neutralisé par au moins un agent de neutralisation, choisi parmi les hydroxydes et / ou oxydes de calcium, de magnésium, de baryum, de lithium, parmi les hydroxydes de sodium, de potassium, ou l'ammoniaque, parmi les amines primaires, secondaires et tertiaires, et leurs mélanges.

De manière générale, les poudres selon l'invention sont caractérisées en ce que le polymère vinylique hydrosoluble mis en oeuvre au cours de l'étape b), est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

De manière générale, les poudres selon l'invention sont aussi caractérisées en ce que le polymère vinylique hydrosoluble mis en oeuvre au cours de l'étape b) peut éventuellement avant ou après la réaction de neutralisation totale ou partielle, être traité et séparé en plusieurs phases, selon des procédés statiques ou dynamiques connus de l'homme du métier, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Un autre objet de l'invention réside dans l'utilisation des poudres selon l'invention, pour fabriquer une dispersion aqueuse d'au moins un hydroxyde métallique choisi parmi les hydroxydes de calcium, magnésium et leurs mélanges.

Il sont aussi décrits les dispersions aqueuses d'au moins un hydroxyde métallique, préférentiellement choisi parmi les hydroxydes de calcium, magnésium, cuivre, zinc, fer et leurs mélanges, très préférentiellement de calcium, magnésium et leurs mélanges.

Un autre objet de l'invention réside dans l'utilisation des poudres contenant au moins un oxyde choisi parmi les oxydes de calcium et / ou de magnésium et un hydroxyde métallique pour traiter les effluents domestiques ou industriels, notamment les effluents gazeux telles que les fumées acides.

Un autre objet de l'invention réside dans l'utilisation des poudres selon l'invention, comme produit d'amendement pour les sols.

Les exemples suivants illustrent l'invention, sans toutefois en limiter la portée.

### EXEMPLES

Dans tous les exemples, le poids moléculaire des polymères mis en oeuvre est déterminé selon la méthode explicitée ci-dessous, par Chromatographie d'Exclusion Stérique (CES).

Une prise d'essai de la solution de polymère correspondant à 90 mg de matière sèche est introduite dans un flacon de 10 ml.

Il est ajouté de la phase mobile, additionnée de 0,04 % de THF, jusqu'à une masse totale de 10 g.

La composition de cette phase mobile est la suivante : NaNO₃ : 0.2 mol/L, CH₃COOH : 0.5 mol/L, acétonitrile 5 % volume.

La chaîne de CES est composée d'une pompe isocratique de type Waters™ 510, dont le débit est réglé à 0.8 mL/min, d'un passeur d'échantillons Waters 717+, d'un four contenant une précolonne de type "Guard Column Ultrahydrogel Waters™", suivie d'un jeu de colonnes de 7.8 mm de diamètre interne et 30 cm de longueur de type "Ultrahydrogel Waters™", dont les porosités nominales sont, dans l'ordre de leur connexion : 2000, 1000, 500 et 250 Â.

La détection est assurée par un réfractomètre différentiel de type Waters™ 410.

La température du four et du détecteur est régulée à 35°C.

L'acquisition et le traitement du chromatogramme sont effectués par l'utilisation du logiciel PSS WinGPC Scientific v 4.02.

La CES est étalonnée par une série d'étalons polyacrylate de sodium fourni par Polymer Standard Service sous les références PAA 18 K, PAA 8K, PAA 5K, PAA 4K, PAA 3K. La courbe d'étalonnage est de type linéaire et prend en compte la correction obtenue grâce au marqueur de débit (THF).

### Exemple 1

Cet exemple illustre le procédé selon l'invention, de fabrication d'une poudre mixte et autodispersable d'oxyde et d'hydroxyde de calcium.

Cet exemple illustre aussi les poudres mixtes et autodispersables d'oxyde et d'hydroxyde de calcium selon l'invention.

Cet exemple illustre également l'utilisation de ces poudres lorsqu'elles sont mises en dispersion aqueuse dans l'eau.

Cet exemple illustre enfin les dispersions aqueuses selon l'invention, et obtenues par introduction desdites poudres dans l'eau.

### Essai n° 1

Cet essai est un témoin, correspondant à la fabrication d'une dispersion aqueuse de Ca(OH)₂, selon les méthodes bien connues de l'homme du métier, en vue d'obtenir une teneur en poids sec de Ca(OH)₂ égale à 50 % du poids total de ladite dispersion.

### Essais n° 2 à 5

Ces essais illustrent l'invention.

Pour chacun d'eux, on commence par peser selon l'étape a) du procédé de l'invention 400 grammes de CaO sous forme de poudre sèche.

On pulvérise sur cet oxyde de calcium, et selon l'étape b) du procédé de l'invention, 12 grammes d'une solution contenant 20 % en poids sec d'un polymère vinylique hydrosoluble par rapport à son poids total.

Dans ce cas, la teneur en poids sec d'hydroxyde de calcium est égale à 9,6 % du poids total de la poudre traitée.

### Essai n° 2

Cet essai illustre l'invention, sans toutefois en représenter la variante préférentielle. Il met en oeuvre un homopolymère vinylique hydrosoluble qui est un homopolymère hydrosoluble de l'acide acrylique, totalement neutralisé par la soude et de poids moléculaire égal à 3 500 g/mole.

### Essai n° 3

Cet essai illustre l'invention, sans toutefois en représenter la variante préférentielle. Il met en oeuvre un polymère vinylique hydrosoluble qui est un copolymère vinylique hydrosoluble constitué de, exprimé en pourcentage en poids de chacun des constituants :
- 82,6 % en poids d'acide acrylique,
- 17,4 % en poids de méthacrylate de méthyle,
totalement neutralisé par la soude et de poids moléculaire égal à 2 000 g/mole.

### Essai n° 4

Cet essai illustre l'invention, ainsi que sa variante préférentielle. Il met en oeuvre un polymère vinylique hydrosoluble qui est un copolymère vinylique hydrosoluble constitué de, exprimé en pourcentage en poids de chacun des constituants :
- 9,7 % en poids d'acide acrylique et 1,55 % en poids d'acide méthacrylique,
- 88,75 % en poids de méthacrylate de méthoxypolyéthylène glycol de poids moléculaire égal à 5 000 g/mole,
totalement neutralisé par la soude et de poids moléculaire égal à 52 000 g/mole.

### Essai n° 5

Cet essai illustre l'invention, ainsi que sa variante préférentielle. Il met en oeuvre un polymère vinylique hydrosoluble qui est un copolymère vinylique hydrosoluble constitué de, exprimé en pourcentage en poids de chacun des constituants :
- 5,8 % en poids d'acide acrylique et 1,65 % en poids d'acide méthacrylique,
- 92,55 % en poids de méthacrylate de méthoxypolyéthylène glycol de poids moléculaire égal à 5 000 g/mole,
totalement neutralisé par la soude et de poids moléculaire égal à 64 400 g/mole.

Chaque poudre obtenue selon les essais n° 2 à 5 est ensuite introduite dans l'eau immédiatement après sa fabrication, de manière à réaliser une dispersion aqueuse présentant une teneur en poids sec d'hydroxyde de calcium égale à 50 % de son poids total.

A partir de cette même poudre, on a également fabriqué des dispersions aqueuses avec une teneur en poids sec d'hydroxyde de calcium identique, mais après avoir stocké ladite poudre à 25°C pendant 14 jours : ce sont les essais n° 6 à 9, qui mettent respectivement en oeuvre les mêmes polymères que pour les essais n° 2 à 5.

De même, après avoir stocké cette poudre mais pendant 28 jours, on a fabriqué des dispersions aqueuses avec une teneur en poids d'hydroxyde de calcium identique : ce sont les essais n° 10 à 13, qui mettent respectivement en oeuvre les mêmes polymères que pour les essais n° 2 à 5.

On mesure alors, selon les méthodes bien connues de l'homme du métier, la viscosité Brookfield™ à 25°C et à 1, 10 et 100 tours par minute des dispersions obtenues, respectivement notées µ₁, µ₁₀ et µ₁₀₀ et qui sont reportées dans les tableaux 1, 2 et 3.

**Tableau 1**

| **Essai n°** | **1** | **2** | **3** | **4** | **5** |
|---|---|---|---|---|---|
| Référence / Invention | Référence | Invention | Invention | Invention | Invention |
| µ₁ (Pa.s) | 30 | 20 | 30 | 8,8 | 10,2 |
| µ₁₀ (Pa.s) | 4,8 | 4,7 | 4,6 | 3,6 | 4,0 |
| µ₁₀₀ (Pa.s) | 2,9 | 2,5 | 2,1 | 1,4 | 1,4 |

**Tableau 2**

| **Essai n°** | **1** | **6** | **7** | **8** | **9** |
|---|---|---|---|---|---|
| Référence / Invention | Référence | Invention | Invention | Invention | Invention |
| µ₁ (Pa.s) | 30 | 21 | 28 | 9,5 | 11,2 |
| µ₁₀ (Pa.s) | 4,8 | 4,7 | 4,7 | 3,8 | 4,1 |
| µ₁₀₀ (Pa.s) | 2,9 | 2,4 | 2,2 | 1,4 | 1,5 |

**Tableau 3**

| **Essai n°** | **1** | **10** | **11** | **12** | **13** |
|---|---|---|---|---|---|
| Référence / Invention | Référence | Invention | Invention | Invention | Invention |
| µ₁ (Pa.s) | 30 | 21 | 29 | 9,1 | 11 |
| µ₁₀ (Pa.s) | 4,8 | 4,7 | 4,6 | 3,8 | 4,1 |
| µ₁₀₀ (Pa.s) | 2,9 | 2,5 | 2,2 | 1,4 | 1,5 |

L'examen des tableaux 1, 2 et 3 démontre que la mise en oeuvre, selon le procédé de l'invention, d'un polymère tel que décrit selon les essais n° 2 à 5, confère bien un caractère autodispersable à la poudre obtenue : en effet, on obtient des dispersions aqueuses d'hydroxyde de calcium, ayant la même teneur en poids sec d'hydroxyde de calcium que la référence (50 %), mais dont les viscosités ont pu être abaissées par la mise en oeuvre dudit polymère.

De plus, les tableaux 2 et 3 démontrent que le caractère autodispersable acquis par la poudre au moment du traitement par le polymère vinylique hydrosoluble, autorise le stockage de la poudre, et sa mise en oeuvre ultérieure pour fabriquer une dispersion aqueuse : 14 jours et même 28 jours plus tard, ladite poudre conserve son caractère autodispersable dans l'eau, comme en témoignent les valeurs de viscosités mesurées.

### Exemple 2

Cet exemple illustre le procédé selon l'invention, de fabrication d'une poudre mixte et autodispersable d'oxyde et d'hydroxyde de calcium.

Cet exemple illustre aussi la poudre mixte et autodispersable d'oxyde et d'hydroxyde de calcium selon l'invention.

Cet exemple illustre également l'utilisation de cette poudre lorsqu'elle est mise en dispersion aqueuse.

Cet exemple illustre enfin les dispersions aqueuses selon l'invention, et obtenues par introduction desdites poudres dans l'eau : à la différence de l'exemple précédent, on n'a mis en oeuvre qu'un seul polymère selon l'invention, mais on a fabriqué plusieurs dispersions aqueuses présentant des teneurs en poids sec d'hydroxyde de calcium différentes.

### Essais n° 14 à 17

Ces essais représentent des références, constituées d'une dispersion aqueuse de Ca(OH)₂ et réalisées sans agent dispersant dont la teneur en poids sec de Ca(OH)₂ est égale à 30 %, 35 %, 40 % et 45 %, respectivement pour les essais n° 14, 15, 16 et 17.

On mesure alors, selon les méthodes bien connues de l'homme du métier, la viscosité Brookfield™ à 25°C et à 1, 10 et 100 tours par minute des dispersions obtenues, respectivement notées µ₁, µ₁₀ et µ₁₀₀. Celles-ci sont reportées dans le tableau 4.

### Essais n° 18 à 21

Ces essais illustrent l'invention.

Pour chacun d'eux, on commence par peser selon l'étape a) du procédé de l'invention 400 grammes de CaO sous forme de poudre sèche.

On pulvérise sur cet oxyde de calcium, et selon l'étape b) du procédé de l'invention, 12 grammes d'une solution contenant 20 % en poids sec d'un polymère vinylique hydrosoluble par rapport à son poids total.

Ce polymère est un copolymère vinylique hydrosoluble constitué de, exprimé en pourcentage en poids de chacun des constituants :
- 9,7 % en poids d'acide acrylique et 1,55 % en poids d'acide méthacrylique,
- 88,75 % en poids de méthacrylate de méthoxypolyéthylène glycol de poids moléculaire égal à 5 000 g/mole,
totalement neutralisé par la soude et de poids moléculaire égal à 52 000 g/mole.

La teneur en poids sec d'hydroxyde de calcium est alors égale à 9,6 % du poids total de la poudre traitée.

La poudre ainsi fabriquée est ensuite mise en dispersion dans l'eau, de manière à obtenir une teneur en poids d'hydroxyde de calcium égale à 30 %, 35 %, 40 % et 45 %, respectivement pour les essais n° 18, 19, 20 et 21.

On mesure alors, selon les méthodes bien connues de l'homme du métier, la viscosité Brookfield™ à 25°C et à 1, 10 et 100 tours par minute des dispersions obtenues, respectivement notées µ₁, µ₁₀ et µ₁₀₀. Celles-ci sont reportées dans le tableau 4.

**Tableau 4**

| **Essai n°** | **14** | **18** | **15** | **19** | **16** | **20** | **17** | **21** |
|---|---|---|---|---|---|---|---|---|
| Extrait sec (% en poids de Ca(OH)₂) | 30 | 30 | 35 | 35 | 40 | 40 | 45 | 45 |
| µ₁ (Pa.s) | 24 | 5 | 4,8 | 1,2 | 6,2 | 4,2 | 17 | 6,8 |
| µ₁₀ (Pa.s) | 7,1 | 0,9 | 1,4 | 0,1 | 2,5 | 0,6 | 3,5 | 2,5 |
| µ₁₀₀ (Pa.s) | 1,0 | 0,03 | 2,0 | 0,05 | 0,4 | 0,1 | 1,3 | 0,6 |

Dans le tableau 4, la comparaison entre les essais 14 et 18, 15 et 19, 16 et 20, 17 et 21, démontre que la mise en oeuvre, selon le procédé de l'invention, d'un polymère vinylique hydrosoluble, confère bien un caractère autodispersable à la poudre obtenue : en effet, on obtient des dispersions aqueuses d'hydroxyde de calcium, ayant la même teneur en poids sec d'hydroxyde de calcium que l'art antérieur, mais dont les viscosités ont pu être abaissées par la mise en oeuvre dudit polymère.

La Demanderesse indique que l'homme du métier pourra mettre en oeuvre, s'il le souhaite, un agent épaississant en vue d'optimiser la stabilité des dispersions obtenues. Un tel agent épaississant peut être notamment le Thixol™ 53 L commercialisé par la société COATEX™.

### Exemple 3

Cet exemple illustre le procédé selon l'invention, de fabrication d'une poudre mixte et autodispersable d'oxyde et d'hydroxyde de calcium.

Cet exemple illustre aussi la poudre mixte et autodispersable d'oxyde et d'hydroxyde de calcium selon l'invention.

Cet exemple illustre également l'utilisation de cette poudre lorsqu'elle est mise en dispersion aqueuse dans l'eau.

Cet exemple a pour objet plus précis d'illustrer que, dans le cas de la variante préférentielle de l'invention, on n'observe pas de retard à l'hydratation lors de la mise en dispersion dans l'eau de la poudre fabriquée.

Pour chacun des essais n° 22 à 25, on commence par fabriquer une poudre mixte d'oxyde et d'hydroxyde de calcium, selon le même protocole que celui décrit dans l'exemple 1 pour les essais n° 2 à 5.

La poudre ainsi fabriquée est mise en dispersion dans l'eau, de manière à obtenir une dispersion aqueuse ayant une teneur en poids sec d'hydroxyde de calcium égale à 37 %.

### Essai n° 22

Cet essai illustre l'invention, sans toutefois en représenter la variante préférentielle. Il met en oeuvre un homopolymère vinylique hydrosoluble qui est un homopolymère vinylique hydrosoluble de l'acide acrylique, totalement neutralisé par la soude et de poids moléculaire égal à 3 500 g/mole.

### Essai n° 23

Cet essai illustre l'invention, sans toutefois en représenter la variante préférentielle. Il met en oeuvre un polymère vinylique hydrosoluble qui est un copolymère vinylique hydrosoluble constitué de, exprimé en pourcentage en poids de chacun des constituants :
- 82,6 % en poids d'acide acrylique,
- 17,4 % en poids de méthacrylate de méthyle,
totalement neutralisé par la soude et de poids moléculaire égal à 2 000 g/mole.

### Essai n° 24

Cet essai illustre l'invention, ainsi que sa variante préférentielle. Il met en oeuvre un polymère vinylique hydrosoluble qui est un copolymère vinylique hydrosoluble constitué de, exprimé en pourcentage en poids de chacun des constituants :
- 5,8 % en poids d'acide acrylique et 1,65 % en poids d'acide méthacrylique,
- 92,55 % en poids de méthacrylate de méthoxypolyéthylène glycol de poids moléculaire égal à 5 000 g/mole,
totalement neutralisé par la soude et de poids moléculaire égal à 64 400 g/mole.

### Essai n° 25

Cet essai illustre l'invention, ainsi que sa variante préférentielle. Il met en oeuvre un polymère vinylique hydrosoluble qui est un copolymère vinylique hydrosoluble constitué de, exprimé en pourcentage en poids de chacun des constituants :
- 9,7 % en poids d'acide acrylique et 1,55 % en poids d'acide méthacrylique,
- 88,75 % en poids de méthacrylate de méthoxypolyéthylène glycol de poids moléculaire égal à 5 000 g/mole,
totalement neutralisé par la soude et de poids moléculaire égal à 52 000 g/mole.

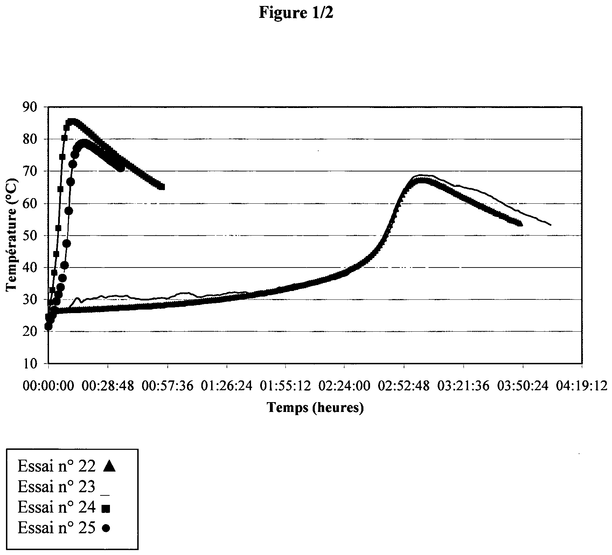

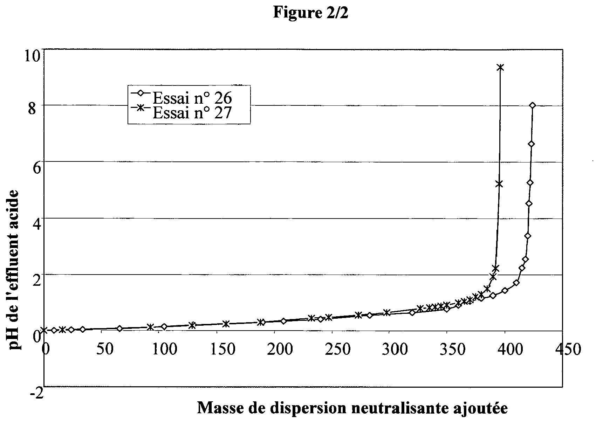

De plus, pour chacun des essais n° 22 à 25, on a représenté sur la figure 1/2 l'évolution de la température du milieu réactionnel en fonction du temps.

L'examen de cette figure démontre que seuls les polymères correspondant à la variante préférentielle de l'invention (selon les essais n° 24 et 25) ne conduisent pas à un retard à l'hydratation. Cet exemple illustre donc que les polymères utilisés selon la variante préférentielle de l'invention, permettent d'obtenir des poudres mixtes d'oxyde et d'hydroxyde de calcium, autodispersables dans l'eau, et dont l'hydratation est immédiate lorsqu'on met de telles poudres en dispersion dans l'eau.

### Exemple 4

Cet exemple a pour but d'illustrer la mise en oeuvre d'une dispersion aqueuse d'hydroxyde de calcium selon l'invention, obtenue par mise en dispersion dans l'eau d'une poudre selon l'invention, dans une application de traitement d'effluents acides.

Cet exemple démontre notamment que le pouvoir neutralisant (tel qu'explicité dans l'exemple) d'une telle dispersion, est supérieur au pouvoir neutralisant d'une dispersion aqueuse obtenue selon l'art antérieur.

Pour ce faire, on commence par préparer une formulation dite "effluent acide", par mélange puis homogénéisation dans un bécher de 1 L de 810.5 g d'eau industrielle et de 143 g d'acide sulfurique à 100 %. Le bécher d'effluent acide est maintenu sous agitation légère et est alors muni d'une électrode de mesure du pH puis placé sur une balance.

Au moyen d'une pompe péristaltique, on va ajouter la dispersion aqueuse à tester selon l'art antérieur ou selon l'invention, encore appelée "dispersion neutralisante", dans l'effluent acide à raison d'un débit de 360 g par heure. La masse ajoutée dans le bécher d'effluent et le pH de l'effluent acide sont relevés en même temps, jusqu'à ce que le pH atteigne une valeur supérieure à 7, cette valeur correspondant à la neutralisation totale de l'acidité et la fin de l'essai, la pompe étant alors arrêtée.

### Essai n° 26

Cet essai illustre l'art antérieur.

Il met en oeuvre comme dispersion neutralisante, une dispersion aqueuse d'hydroxyde de calcium selon l'art antérieur, obtenue comme suit.

Dans un bécher de 1 L, on pèse 460 g d'eau industrielle puis on ajoute sous agitation modérée 200 g de chaux éteinte (Ca(OH)₂). Cette formulation, homogène après 5 minutes d'agitation, est maintenue sous faible agitation pour éviter toute décantation éventuelle pouvant nuire à l'essai.

### Essai n° 27

Cet essai illustre l'invention.

Il met en oeuvre comme dispersion neutralisante, une dispersion aqueuse d'hydroxyde de calcium selon l'invention, obtenue comme suit.

Dans un mélangeur planétaire, on pèse 151.35 g de chaux vive. Sous agitation modérée on introduit ensuite par pulvérisation une solution constituée de 4.85 g d'eau industrielle et de 6.85 g d'une émulsion à 33 % en poids sec d'un polymère qui est un copolymère vinylique hydrosoluble constitué de, exprimé en pourcentage en poids de chacun des constituants :
- 5,8 % en poids d'acide acrylique et 1,65 % en poids d'acide méthacrylique,
- 92,55 % en poids de méthacrylate de méthoxypolyéthylène glycol de poids moléculaire égal à 5 000 g/mole,
totalement neutralisé par la soude et de poids moléculaire égal à 64 400 g/mole.

Après 15 minutes d'agitation, la poudre obtenue est pesée et on obtient une masse de 156,15 g : ceci traduit une perte en poids de 6,9 g correspondant à de l'eau évaporée qui n'a donc pas participé à la réaction de pré-extinction de la chaux vive.

Cette poudre est ensuite utilisée pour fabriquer la dispersion neutralisante par ajout du mélange précité dans 506.2 g d'eau industrielle.

Les quantités précédentes ont été déterminées de manière à ce que les deux dispersions neutralisantes selon les essais n° 26 et 27, contiennent la même masse de chaux exprimée en chaux éteinte soit 200 g dispersés dans 460 g d'eau industrielle.

On a représenté sur la figure 2/2 l'évolution du pH de l'effluent acide en fonction de la masse de dispersion neutralisante ajoutée. Les courbes correspondant aux 2 essais montrent sans équivoque que l'objet de l'invention permet d'obtenir une neutralisation totale de l'effluent acide avec une quantité moindre de dispersion neutralisante, ce qui traduit bien une efficacité neutralisante supérieure.

### Exemple 5

Cet exemple illustre le procédé selon l'invention, de fabrication d'une poudre mixte et autodispersable d'oxyde et d'hydroxyde de magnésium. Il illustre aussi les poudres mixtes et autodispersables d'oxyde et d'hydroxyde de magnésium selon l'invention, leur utilisation lorsqu'elles sont mises en dispersion aqueuse, de même que les dispersions aqueuses obtenues.

### Essai n° 28

Cet essai est un témoin, correspondant à la fabrication d'une dispersion aqueuse de Mg(OH)₂, selon les méthodes bien connues de l'homme du métier, en vue d'obtenir une teneur en poids sec de Mg(OH)₂ égale à 50 % du poids total de ladite dispersion.

### Essais n° 29 à 32

Ces essais illustrent l'invention.

Pour chacun d'eux, on commence par peser selon l'étape a) du procédé de l'invention 400 grammes de MgO sous forme de poudre sèche. On pulvérise sur cet oxyde de magnésium, et selon l'étape b) du procédé de l'invention, 10 grammes d'une solution contenant 20 % en poids sec d'un polymère vinylique hydrosoluble par rapport à son poids total. Dans ce cas, la teneur en poids sec d'hydroxyde de magnésium est égale à 8 % du poids total de la poudre traitée.

### Essai n° 29

Cet essai illustre l'invention, sans toutefois en représenter la variante préférentielle. Il met en oeuvre un homopolymère vinylique hydrosoluble qui est un homopolymère hydrosoluble de l'acide acrylique, totalement neutralisé par la soude et de poids moléculaire égal à 5 000 g/mole.

### Essai n° 30

Cet essai illustre l'invention, sans toutefois en représenter la variante préférentielle. Il met en oeuvre un polymère vinylique hydrosoluble qui est un copolymère vinylique hydrosoluble constitué de, exprimé en pourcentage en poids de chacun des constituants :
- 80,0 % en poids d'acide acrylique,
- 20,0 % en poids de méthacrylate de méthyle,
totalement neutralisé par la soude et de poids moléculaire égal à 2 500 g/mole.

### Essai n° 31

Cet essai illustre l'invention, ainsi que sa variante préférentielle. Il met en oeuvre un polymère vinylique hydrosoluble qui est un copolymère vinylique hydrosoluble constitué de, exprimé en pourcentage en poids de chacun des constituants :
- 9,7 % en poids d'acide acrylique et 1,55 % en poids d'acide méthacrylique,
- 88,75 % en poids de méthacrylate de méthoxypolyéthylène glycol de poids moléculaire égal à 5 000 g/mole,
totalement neutralisé par la soude et de poids moléculaire égal à 52 000 g/mole.

### Essai n° 32

Cet essai illustre l'invention, ainsi que sa variante préférentielle. Il met en oeuvre un polymère vinylique hydrosoluble qui est un copolymère vinylique hydrosoluble constitué de, exprimé en pourcentage en poids de chacun des constituants :
- 5,8 % en poids d'acide acrylique et 1,65 % en poids d'acide méthacrylique,
- 92,55 % en poids de méthacrylate de méthoxypolyéthylène glycol de poids moléculaire égal à 5 000 g/mole,
totalement neutralisé par la soude et de poids moléculaire égal à 64 400 g/mole.

Chaque poudre obtenue selon les essais n° 29 à 32 est ensuite introduite dans l'eau immédiatement après sa fabrication, de manière à réaliser une dispersion aqueuse présentant une teneur en poids sec d'hydroxyde de magnésium égale à 50 % de son poids total. A partir de cette même poudre, on a également fabriqué des dispersions aqueuses avec une teneur en poids sec d'hydroxyde de magnésium identique, mais après avoir stocké ladite poudre à 25°C pendant 14 jours : ce sont les essais n° 33 à 36, qui mettent respectivement en oeuvre les mêmes polymères que pour les essais n° 29 à 32.

De même, après avoir stocké cette poudre mais pendant 28 jours, on a fabriqué des dispersions aqueuses avec une teneur en poids d'hydroxyde de magnésium identique : ce sont les essais n° 37 à 40, qui mettent respectivement en oeuvre les mêmes polymères que pour les essais n° 29 à 32.

On mesure alors, selon les méthodes bien connues de l'homme du métier, la viscosité Brookfield™ à 25°C et à 1, 10 et 100 tours par minute des dispersions obtenues, respectivement notées µ₁, µ₁₀ et µ₁₀₀ et qui sont reportées dans les tableaux 5, 6 et 7.

**Tableau 5**

| **Essai n°** | **28** | **29** | **30** | **31** | **32** |
|---|---|---|---|---|---|
| Référence/ Invention | Référence | Invention | Invention | Invention | Invention |
| µ₁ (Pa.s) | 35 | 21 | 31 | 10,5 | 11,2 |
| µ₁₀ (Pa.s) | 6,2 | 4,9 | 5,3 | 4,6 | 4,9 |
| µ₁₀₀ (Pa.s) | 3,2 | 2,8 | 2,4 | 2,0 | 2,4 |

**Tableau 6**

| **Essai n°** | **28** | **33** | **34** | **35** | **36** |
|---|---|---|---|---|---|
| Référence / Invention | Référence | Invention | Invention | Invention | Invention |
| µ₁ (Pa.s) | 35 | 21 | 31 | 10,5 | 11,2 |
| µ₁₀ (Pa.s) | 6,2 | 4,9 | 5,7 | 4,8 | 4,9 |
| µ₁₀₀ (Pa.s) | 3,2 | 2,7 | 2,6 | 2,0 | 2,5 |

**Tableau 7**

| **Essai n°** | **28** | **37** | **38** | **39** | **40** |
|---|---|---|---|---|---|
| Référence / Invention | Référence | Invention | Invention | Invention | Invention |
| µ₁ (Pa.s) | 35 | 21,5 | 32 | 11 | 11,8 |
| µ₁₀ (Pa.s) | 6,2 | 5,0 | 5,8 | 4,8 | 4,9 |
| µ₁₀₀ (Pa.s) | 3,2 | 2,8 | 2,8 | 2,0 | 2,5 |

L'examen des tableaux 5, 6 et 7 démontre que la mise en oeuvre, selon le procédé de l'invention, confère bien un caractère autodispersable à la poudre obtenue : en effet, on obtient des dispersions aqueuses ayant la même teneur en poids sec d'hydroxyde de calcium que la référence mais dont les viscosités ont pu être abaissées par la mise en oeuvre dudit polymère.

De plus, ces tableaux démontrent que le caractère autodispersable acquis par la poudre au moment du traitement par le polymère vinylique hydrosoluble, autorise le stockage de la poudre, et sa mise en oeuvre ultérieure pour fabriquer une dispersion aqueuse : 14 jours et même 28 jours plus tard, ladite poudre conserve son caractère autodispersable dans l'eau, comme en témoignent les valeurs de viscosités mesurées.

Enfin, ces tableaux illustrent aussi l'avantage de mettre en oeuvre la variante préférentielle de l'invention, qui conduit aux viscosités les plus basses.

## Revendications

1. Procédé de fabrication d'une poudre mixte contenant au moins un oxyde et un hydroxyde métallique, **caractérisé :**
1) **en ce qu'**il comprend les étapes de :
a) fournir au moins un oxyde métallique sous forme de poudre sèche, ledit oxyde métallique étant choisi parmi un oxyde de calcium et / ou de magnésium
b) traiter ladite poudre avec un polymère sous forme d'une solution et / ou d'une émulsion aqueuse, de manière à hydrater partiellement l'oxyde métallique en vue d'obtenir l'hydroxyde métallique correspondant de sorte que la teneur en poids sec d'hydroxyde métallique formé soit inférieure à 99 %, préférentiellement à 75 %, très préférentiellement à 50 %, et extrêmement préférentiellement à 10 % du poids total de la poudre ainsi traitée,
2) et **en ce que** ledit polymère est un copolymère vinylique hydrosoluble constitué :
- d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3- (acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères,
- et d'au moins un monomère non ionique de formule (I), ou des mélanges de plusieurs monomères de formule (I) : 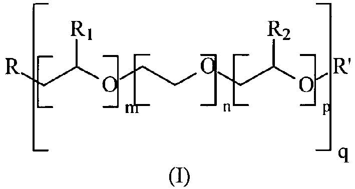 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

2. Procédé selon la revendication 1, **caractérisé en ce que** ledit copolymère vinylique hydrosoluble mis en oeuvre au cours de l'étape b) est constitué, exprimé en pourcentage en poids de chacun des constituants (la somme des pourcentages en poids de tous les constituants étant égale à 100 %):
- de 1 % à 20 %, préférentiellement de 2 % à 15 %, très préférentiellement de 3 % à 12 % d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle **en ce que** le monomère vinylique est l'acide acrylique ou l'acide méthacrylique ou les mélanges de ces monomères,
- de 80 % à 99 %, préférentiellement de 85 % à 98 %, très préférentiellement de 88 % à 97 % d'au moins un monomère non ionique de formule (I), ou des mélanges de plusieurs monomères de formule (I) : 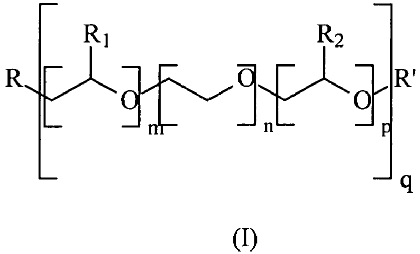 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

3. Procédé selon l'une des revendications 1 à 2, **caractérisé en ce que** le copolymère vinylique hydrosoluble mis en oeuvre au cours de l'étape b) est totalement ou partiellement neutralisé par au moins un agent de neutralisation, choisi parmi les hydroxydes et / ou oxydes de calcium, de magnésium, de baryum, de lithium, parmi les hydroxydes de sodium, de potassium, ou l'ammoniaque, parmi les amines primaires, secondaires et tertiaires, et leurs mélanges.

4. Procédé selon l'une des revendications 1 à 3, **caractérisé en ce qu'**il met en oeuvre un agent épaississant pendant et / ou après l'étape b) dudit procédé.

5. Poudres mixtes contenant au moins un oxyde métallique choisi parmi les oxydes de calcium et / ou de magnésium et au moins l'hydroxyde métallique correspondant, **caractérisées :**
1) **en ce qu'**elles présentent une teneur en poids sec d'hydroxyde métallique inférieure à 99 %, préférentiellement à 75 %, très préférentiellement à 50 %, et extrêmement préférentiellement à 10 % de leur poids total,
2) et **en ce qu'**elles contiennent un polymère qui est un copolymère vinylique hydrosoluble constitué :
- d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3- (acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle en ce que le monomère vinylique est l'acide acrylique ou l'acide méthacrylique ou les mélanges de ces monomères,
- et d'au moins un monomère non ionique de formule (I), ou des mélanges de plusieurs monomères de formule (I) : 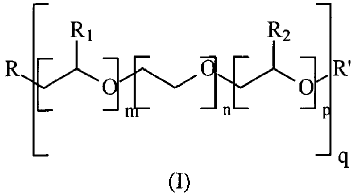 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

6. Poudres mixtes selon la revendication 5, **caractérisées en ce que** ledit copolymère vinylique hydrosoluble est constitué, exprimé en pourcentage en poids de chacun des constituants (la somme des pourcentages en poids de tous les constituants étant égale à 100%):
- de 1 % à 20 %, préférentiellement de 2 % à 15 %, très préférentiellement de 3 % à 12 % d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle **en ce que** le monomère vinylique est l'acide acrylique ou l'acide méthacrylique ou les mélanges de ces monomères,
- de 80 % à 99 %, préférentiellement de 85 % à 98 %, très préférentiellement de 88 % à 97 % d'au moins un monomère non ionique de formule (I), ou des mélanges de plusieurs monomères de formule (I) : 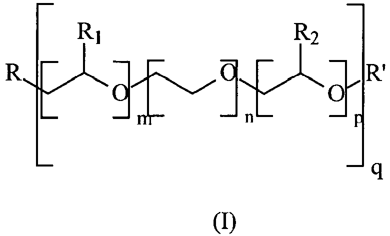 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α'diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

7. Poudres mixtes selon l'une des revendications 5 à 6, **caractérisées en ce que** le copolymère vinylique hydrosoluble, est totalement ou partiellement neutralisé par au moins un agent de neutralisation, choisi parmi les hydroxydes et / ou oxydes de calcium, de magnésium, de baryum, de lithium, parmi les hydroxydes de sodium, de potassium, ou l'ammoniaque, parmi les amines primaires, secondaires et tertiaires, et leurs mélanges.

8. Utilisation des poudres mixtes selon l'une des revendications 5 à 7, pour fabriquer une dispersion aqueuse d'au moins un hydroxyde métallique, choisi parmi les hydroxydes de calcium, magnésium et leurs mélanges.

9. Utilisation de poudres mixtes contenant au moins un oxyde métallique choisi parmi les oxydes de calcium et / ou de magnésium et au moins l'hydroxyde métallique correspondant **caractérisées:**
1) **en ce qu'**elles présentent une teneur en poids sec d'hydroxyde métallique inférieure à 99 %, préférentiellement à 75 %, très préférentiellement à 50 %, et extrêmement préférentiellement à 10 % de leur poids total,
2) et **en ce qu'**elles contiennent un polymère qui est un copolymère hydrosoluble contenant au moins un monomère vinylique défini selon l'une des revendications 1 à 3, pour traiter les effluents domestiques ou industriels, notamment les effluents gazeux telles que les fumées acides.

10. Utilisation de poudres mixtes contenant au moins un oxyde métallique choisi parmi les oxydes de calcium et / ou de magnésium et au moins l'hydroxyde métallique correspondant **caractérisées:**
1) **en ce qu'**elles présentent une teneur en poids sec d'hydroxyde métallique inférieure à 99 %, préférentiellement à 75 %, très préférentiellement à 50 %, et extrêmement préférentiellement à 10 % de leur poids total,
2) et **en ce qu'**elles contiennent un polymère qui est un copolymère hydrosoluble contenant au moins un monomère vinylique défini selon l'une des revendications 1 à 3, comme produit d'amendement pour les sols.

11. Utilisation selon l'une quelconque des revendications 9 et 10, **caractérisée en ce que** le polymère vinylique hydrosoluble est un polymère hydrosoluble contenant au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle **en ce que** le monomère vinylique est l'acide acrylique ou l'acide méthacrylique ou les mélanges de ces monomères.

12. Utilisation selon l'une quelconque des revendications 9 à 11, **caractérisée en ce que** ledit polymère vinylique hydrosoluble est un copolymère vinylique hydrosoluble constitué :
- choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2- (méthacryloyloxy) éthyl] triméthyl ammonium, de chlorure ou de sulfate de [2-(acryloyloxy) éthyl] triméthyl ammonium, de chlorure ou de sulfate de [3- (acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle **en ce que** le monomère vinylique est l'acide acrylique ou l'acide méthacrylique ou les mélanges de ces monomères,
- et d'au moins un monomère non ionique de formule (I), ou des mélanges de plusieurs monomères de formule (I) : 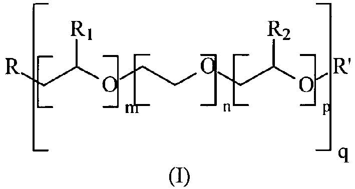 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

13. Utilisation selon la revendication 12, **caractérisée en ce que** ledit copolymère vinylique hydrosoluble est constitué, exprimé en pourcentage en poids de chacun des constituants (la somme des pourcentages en poids de tous les constituants étant égale à 100%):
- de 1 % à 20 %, préférentiellement de 2 % à 15 %, très préférentiellement de 3 % à 12 % d'au moins un monomère vinylique choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'a-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères, et de manière préférentielle **en ce que** le monomère vinylique est l'acide acrylique ou l'acide méthacrylique ou les mélanges de ces monomères,
- de 80 % à 99 %, préférentiellement de 85 % à 98 %, très préférentiellement de 88 % à 97 % d'au moins un monomère non ionique de formule (I), ou des mélanges de plusieurs monomères de formule (I) : 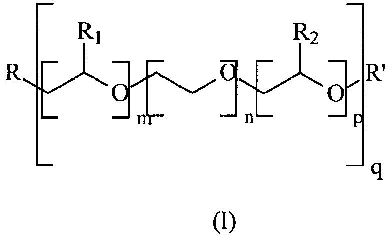 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
- R' représente l'hydrogène ou un radical hydrocarboné ayant 1 à 40 atomes de carbone, préférentiellement 1 à 12 atomes de carbone, et très préférentiellement 1 à 4 atomes de carbone, R' étant de manière extrêmement préférentielle le radical méthyle.

14. Utilisation selon l'une quelconque des revendications 9 à 13, **caractérisée en ce que** le polymère vinylique hydrosoluble, est totalement ou partiellement neutralisé par au moins un agent de neutralisation, choisi parmi les hydroxydes et / ou oxydes de calcium, de magnésium, de baryum, de lithium, parmi les hydroxydes de sodium, de potassium, ou l'ammoniaque, parmi les amines primaires, secondaires et tertiaires, et leurs mélanges.

## Patentansprüche

1. Verfahren zur Herstellung eines Pulvergemisches, das mindestens ein Oxid und ein Metallhydroxid enthält, **dadurch gekennzeichnet:**
1) **dass** es die folgenden Schritte umfasst:
a) Bereitstellen von mindestens einem Metalloxid in Form eines trockenen Pulvers, wobei das Metalloxid aus einem Calcium- und / oder Magnesiumoxid ausgewählt wird
b) Behandeln des Pulvers mit einem Polymer in Form einer Lösung und / oder einer wässerigen Emulsion, um das Metalloxid zum Erhalt des entsprechenden Metallhydroxids teilweise zu hydrieren, so dass der Trockengewichtsgehalt an gebildetem Metallhydroxid weniger als 99%, vorzugsweise weniger als 75%, besonders vorzugsweise weniger als 50% und ganz besonders vorzugsweise weniger als 10% des Gesamtgewichtes des so behandelten Pulvers beträgt,
2) und dadurch, dass das Polymer ein wasserlösliches Vinylcopolymer ist, bestehend aus:
- mindestens einem Vinylmonomer, ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,
- und mindestens einem nichtionischen Monomer der Formel (I) oder Gemischen mehrerer Monomere der Formel (I): 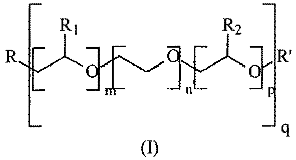 in der:
- m und p für eine Anzahl von Alkylenoxideinheiten von kleiner oder gleich 150 stehen,
- n für eine Anzahl von Ethylenoxideinheiten von weniger oder gleich 150 steht,
- q für eine ganze Zahl steht, die mindestens gleich 1 ist, und zwar so, dass 5 ≤ (m+n+p)q ≤ 150 und vorzugsweise 15 ≤ (m+n+p)q ≤ 120 ist,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion steht, der vorzugsweise zur Vinylgruppe sowie zur Gruppe der Acryl-, Methacryl- und Maleinsäureester sowie zur Gruppe ungesättigter Urethane wie Acrylurethan, Methacrylurethan, α-α'-Dimethyl-Isopropenylbenzylurethan, Allylurethan sowie zur Gruppe der substituierten oder nicht substituierten Allyl- oder Vinylether oder auch zur Gruppe der ethylenisch ungesättigten Amide oder Imide oder auch zur Gruppe bestehend aus Acrylamid und Methacrylamid gehört,
R' für Wasserstoff oder einen Kohlenwasserstoffrest mit 1 bis 40 Kohlenstoffatomen, vorzugsweise 1 bis 12 Kohlenstoffatomen und besonders vorzugsweise 1 bis 4 Kohlenstoffatomen steht , wobei R' ganz besonders vorzugsweise der Methylrest ist.

2. Verfahren nach Anspruch 1, **dadurch gekennzeichnet, dass** das in Schritt b) eingesetzte wasserlösliche Vinylcopolymer gebildet wird, ausgedrückt als Gewichtsprozent eines jeden Bestandteils (wobei die Summe der Gewichtsprozente aller Bestandteile gleich 100% ist):
- zu 1 % bis 20 %, vorzugsweise zu 2 % bis 15 % und besonders vorzugsweise zu 3 % bis 12 % aus mindestens einem Vinylmonomer, ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,
- zu 80 % bis 99 %, vorzugsweise zu 85 % bis 98 % und besonders vorzugsweise zu 88 % bis 97 % aus mindestens einem nicht ionischen Monomer der Formel (I) oder Gemischen mehrerer Monomere der Formel (I): 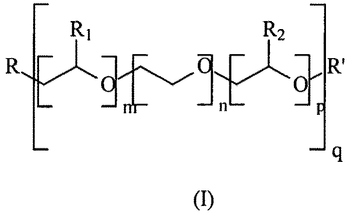 in der:
- m und p für eine Anzahl von Alkylenoxideinheiten von kleiner oder gleich 150 stehen,
- n für eine Anzahl von Ethylenoxideinheiten von weniger oder gleich 150 steht,
- q für eine ganze Zahl steht, die mindestens gleich 1 ist, und zwar so, dass 5 ≤ (m+n+p)q ≤ 150 und vorzugsweise 15 ≤ (m+n+p)q ≤ 120 ist,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion steht, der vorzugsweise zur Vinylgruppe sowie zur Gruppe der Acryl-, Methacryl- und Maleinsäureester sowie zur Gruppe ungesättigter Urethane wie Acrylurethan, Methacrylurethan, α-α'-Dimethyl-Isopropenylbenzylurethan, Allylurethan sowie zur Gruppe der substituierten oder nicht substituierten Allyl- oder Vinylether oder auch zur Gruppe der ethylenisch ungesättigten Amide oder Imide oder auch zur Gruppe bestehend aus Acrylamid und Methacrylamid gehört,
- R' für Wasserstoff oder einen Kohlenwasserstoffrest mit 1 bis 40 Kohlenstoffatomen, vorzugsweise 1 bis 12 Kohlenstoffatomen und besonders vorzugsweise 1 bis 4 Kohlenstoffatomen steht, wobei R' ganz besonders vorzugsweise der Methylrest ist.

3. Verfahren nach einem der Ansprüche 1 bis 2, **dadurch gekennzeichnet, dass** das in Schritt b) eingesetzte wasserlösliche Vinylcopolymer mit mindestens einem Neutralisierungsmittel, welches unter Hydroxiden und / oder Calcium-, Magnesium-, Barium-, Lithiumoxiden, unter Natrium-, Kalium- oder Ammoniakhydroxiden, unter primären, sekundären und tertiären Aminen und Gemischen davon ausgewählt wurde, vollständig oder teilweise neutralisiert wird.

4. Verfahren nach einem der Ansprüche 1 bis 3, **dadurch gekennzeichnet, dass** während und / oder nach Schritt b) des Verfahrens ein Verdickungsmittel eingesetzt wird.

5. Pulvergemische, die mindestens ein aus Calcium- und / oder Magnesiumoxiden ausgewähltes Metalloxid und mindestens das entsprechende Metallhydroxid enthalten, **dadurch gekennzeichnet:**
1) **dass** die Pulvergemische einen Trockengewichtsgehalt an Metallhydroxid von weniger als 99%, vorzugsweise von weniger als 75%, besonders vorzugsweise von weniger als 50% und ganz besonders vorzugsweise von weniger als 10% ihres Gesamtgewichtes aufweisen,
2) und dadurch, dass die Pulvergemische ein Polymer enthalten, das ein wasserlösliches Vinylcopolymer ist, bestehend aus:
- mindestens einem Vinylmonomer, ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,
- und mindestens einem nichtionischen Monomer der Formel (I) oder Gemischen mehrerer Monomere der Formel (I): 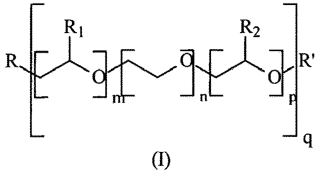 in der:
- m und p für eine Anzahl von Alkylenoxideinheiten von kleiner oder gleich 150 stehen,
- n für eine Anzahl von Ethylenoxideinheiten von weniger oder gleich 150 steht,
- q für eine ganze Zahl steht, die mindestens gleich 1 ist, und zwar so, dass 5 ≤ (m+n+p)q ≤ 150 und vorzugsweise 15 ≤ (m+n+p)q ≤ 120 ist,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion steht, der vorzugsweise zur Vinylgruppe sowie zur Gruppe der Acryl-, Methacryl- und Maleinsäureester sowie zur Gruppe ungesättigter Urethane wie Acrylurethan, Methacrylurethan, α-α'-Dimethyl-Isopropenylbenzylurethan, Allylurethan sowie zur Gruppe der substituierten oder nicht substituierten Allyl- oder Vinylether oder auch zur Gruppe der ethylenisch ungesättigten Amide oder Imide oder auch zur Gruppe bestehend aus Acrylamid und Methacrylamid gehört,
R' für Wasserstoff oder einen Kohlenwasserstoffrest mit 1 bis 40 Kohlenstoffatomen, vorzugsweise 1 bis 12 Kohlenstoffatomen und besonders vorzugsweise 1 bis 4 Kohlenstoffatomen steht , wobei R' ganz besonders vorzugsweise der Methylrest ist.

6. Pulvergemische nach Anspruch 5, **dadurch gekennzeichnet, dass** das wasserlösliche Vinylcopolymer gebildet wird, ausgedrückt als Gewichtsprozent eines jeden Bestandteils (wobei die Summe der Gewichtsprozente aller Bestandteile gleich 100% ist):
- zu 1 % bis 20 %, vorzugsweise zu 2 % bis 15 % und besonders vorzugsweise zu 3 % bis 12 % aus mindestens einem Vinylmonomer, ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder-sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,
- zu 80 % bis 99 %, vorzugsweise zu 85 % bis 98 % und besonders vorzugsweise zu 88 % bis 97 % aus mindestens einem nicht ionischen Monomer der Formel (I) oder Gemischen mehrerer Monomere der Formel (I): 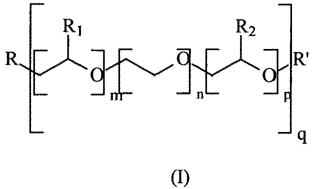 in der:
- m und p für eine Anzahl von Alkylenoxideinheiten von kleiner oder gleich 150 stehen,
- n für eine Anzahl von Ethylenoxideinheiten von weniger oder gleich 150 steht,
- q für eine ganze Zahl steht, die mindestens gleich 1 ist, und zwar so, dass 5 ≤ (m+n+p)q ≤ 150 und vorzugsweise 15 ≤ (m+n+p)q ≤ 120 ist,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion steht, der vorzugsweise zur Vinylgruppe sowie zur Gruppe der Acryl-, Methacryl- und Maleinsäureester sowie zur Gruppe ungesättigter Urethane wie Acrylurethan, Methacrylurethan, α-α'-Dimethyl-Isopropenylbenzylurethan, Allylurethan sowie zur Gruppe der substituierten oder nicht substituierten Allyl- oder Vinylether oder auch zur Gruppe der ethylenisch ungesättigten Amide oder Imide oder auch zur Gruppe bestehend aus Acrylamid und Methacrylamid gehört,
- R' für Wasserstoff oder einen Kohlenwasserstoffrest mit 1 bis 40 Kohlenstoffatomen, vorzugsweise 1 bis 12 Kohlenstoffatomen und besonders vorzugsweise 1 bis 4 Kohlenstoffatomen steht , wobei R' ganz besonders vorzugsweise der Methylrest ist.

7. Pulvergemische nach einem der Ansprüche 5 bis 6, **dadurch gekennzeichnet, dass** das wasserlösliche Vinylcopolymer mit mindestens einem Neutralisierungsmittel, welches unter Hydroxiden und / oder Calcium-, Magnesium-, Barium-, Lithiumoxiden, unter Natrium-, Kalium- oder Ammoniakhydroxiden, unter primären, sekundären und tertiären Aminen und Gemischen davon ausgewählt wurde, vollständig oder teilweise neutralisiert wird.

8. Verwendung von Pulvergemischen nach einem der Ansprüche 5 bis 7 zur Herstellung einer wässrigen Dispersion von mindestens einem Metallhydroxid, ausgewählt aus Calciumhydroxiden, Magnesiumhydroxiden und Gemischen davon.

9. Verwendung von Pulvergemischen, die mindestens ein aus Calcium- und / oder Magnesiumoxiden ausgewähltes Metalloxid und mindestens das entsprechende Metallhydroxid enthalten, **dadurch gekennzeichnet:**
1) **dass** die Pulvergemische einen Trockengewichtsgehalt an Metallhydroxid von weniger als 99%, vorzugsweise von weniger als 75%, besonders vorzugsweise von weniger als 50% und ganz besonders vorzugsweise von weniger als 10% ihres Gesamtgewichtes aufweisen,
2) und dadurch, dass die Pulvergemische ein Polymer enthalten, das ein wasserlösliches Copolymer ist, welches zur Behandlung von häuslichen oder industriellen Ableitungen, insbesondere von Abgasen wie z. B. Rauchgasen, mindestens ein nach einem der Ansprüche 1 bis 3 definiertes Vinylmonomer enthält.

10. Verwendung von Pulvergemischen, die mindestens ein aus Calcium- und / oder Magnesiumoxiden ausgewähltes Metalloxid und mindestens das entsprechende Metallhydroxid enthalten, **dadurch gekennzeichnet:**
1) **dass** die Pulvergemische einen Trockengewichtsgehalt an Metallhydroxid von weniger als 99%, vorzugsweise von weniger als 75%, besonders vorzugsweise von weniger als 50% und ganz besonders vorzugsweise von weniger als 10% ihres Gesamtgewichtes aufweisen,
2) und dadurch, dass sie ein Polymer enthalten, das ein wasserlösliches Copolymer ist, welches als Bodenverbesserer mindestens ein nach einem der Ansprüche 1 bis 3 definiertes Vinylmonomer enthält.

11. Verwendung nach einem der Ansprüche 9 und 10, **dadurch gekennzeichnet, dass** das wasserlösliche Vinylpolymer ein wasserlösliches Polymer ist, bestehend aus mindestens einem Vinylmonomer, ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,

12. Verwendung nach einem der Ansprüche 9 bis 11, **dadurch gekennzeichnet, dass** das wasserlösliche Vinylpolymer ein wasserlösliches Vinylcopolymer ist, bestehend aus:
- ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder -sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,
- und mindestens einem nichtionischen Monomer der Formel (I) oder Gemischen mehrerer Monomere der Formel (I): 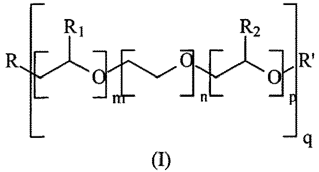 in der:
- m und p für eine Anzahl von Alkylenoxideinheiten von kleiner oder gleich 150 stehen,
- n für eine Anzahl von Ethylenoxideinheiten von weniger oder gleich 150 steht,
- q für eine ganze Zahl steht, die mindestens gleich 1 ist, und zwar so, dass 5 ≤ (m+n+p)q ≤ 150 und vorzugsweise 15 ≤ (m+n+p)q ≤ 120 ist,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion steht, der vorzugsweise zur Vinylgruppe sowie zur Gruppe der Acryl-, Methacryl- und Maleinsäureester sowie zur Gruppe ungesättigter Urethane wie Acrylurethan, Methacrylurethan, α-α'-Dimethyl-Isopropenylbenzylurethan, Allylurethan sowie zur Gruppe der substituierten oder nicht substituierten Allyl- oder Vinylether oder auch zur Gruppe der ethylenisch ungesättigten Amide oder Imide oder auch zur Gruppe bestehend aus Acrylamid und Methacrylamid gehört,
- R' für Wasserstoff oder einen Kohlenwasserstoffrest mit 1 bis 40 Kohlenstoffatomen, vorzugsweise 1 bis 12 Kohlenstoffatomen und besonders vorzugsweise 1 bis 4 Kohlenstoffatomen steht , wobei R' ganz besonders vorzugsweise der Methylrest ist.

13. Verwendung nach Anspruch 12, **dadurch gekennzeichnet, dass** das wasserlösliche Vinylcopolymer gebildet wird, ausgedrückt als Gewichtsprozent eines jeden Bestandteils (wobei die Summe der Gewichtsprozente aller Bestandteile gleich 100% ist):
- zu 1 % bis 20 %, vorzugsweise zu 2 % bis 15 % und besonders vorzugsweise zu 3 % bis 12 % aus mindestens einem Vinylmonomer, ausgewählt aus (Meth)acrylsäure oder aus (Meth)acrylsäureestern, wie vorzugsweise Acrylaten und Methacrylaten mit 1 bis 20 Kohlenstoffatomen in ihrem Esterrest, wie besonders vorzugsweise Methyl-, Ethyl-, Isopropyl-, n-Propyl-, Isobutyl-, n-Butyl-, tert-Butyl-, 2-Ethylhexylacrylate, Methyl-, Ethylmethacrylate, Hydroxylmethacrylate wie solche aus Hydroxyethyl und Hydroxypropyl oder aus (Meth)acrylamiden oder aus vinylaromatischen Monomeren wie vorzugsweise Styrol, α-Methylstyrol oder aus (Meth)acrylestern kationischer Monomere, wie vorzugsweise [2-(Methacryloyloxy)ethyl]trimethylammoniumchlorid oder-sulfat, [2-(Acryloyloxy)ethyl]trimethylammoniumchlorid oder -sulfat, [3-(Acrylamido)propyl]trimethylammoniumchlorid oder -sulfat], Dimethyldiallylammoniumchlorid oder -sulfat, [3-(Methacrylamido)propyl]trimethylammoniumchlorid oder -sulfat oder aus Gemischen dieser Monomere und vorzugsweise dadurch, dass das Vinylmonomer Acrylsäure oder Methacrylsäure oder Gemische dieser Monomere ist,
- zu 80 % bis 99 %, vorzugsweise zu 85 % bis 98 % und besonders vorzugsweise zu 88 % bis 97 % aus mindestens einem nicht ionischen Monomer der Formel (I) oder Gemischen mehrerer Monomere der Formel (I): 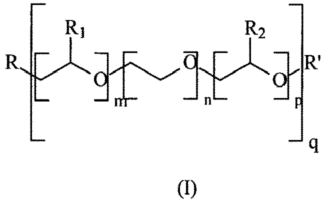 in der:
- m und p für eine Anzahl von Alkylenoxideinheiten von kleiner oder gleich 150 stehen,
- n für eine Anzahl von Ethylenoxideinheiten von weniger oder gleich 150 steht,
- q für eine ganze Zahl steht, die mindestens gleich 1 ist, und zwar so, dass 5 ≤ (m+n+p)q ≤ 150 und vorzugsweise 15 ≤ (m+n+p)q ≤ 120 ist,
- R₁ für Wasserstoff oder den Methyl- oder Ethylrest steht,
- R₂ für Wasserstoff oder den Methyl- oder Ethylrest steht,
- R für einen Rest mit einer polymerisierbaren ungesättigten Funktion steht, der vorzugsweise zur Vinylgruppe sowie zur Gruppe der Acryl-, Methacryl- und Maleinsäureester sowie zur Gruppe ungesättigter Urethane wie Acrylurethan, Methacrylurethan, α-α'-Dimethyl-Isopropenylbenzylurethan, Allylurethan sowie zur Gruppe der substituierten oder nicht substituierten Allyl- oder Vinylether oder auch zur Gruppe der ethylenisch ungesättigten Amide oder Imide oder auch zur Gruppe bestehend aus Acrylamid und Methacrylamid gehört,
- R' für Wasserstoff oder einen Kohlenwasserstoffrest mit 1 bis 40 Kohlenstoffatomen, vorzugsweise 1 bis 12 Kohlenstoffatomen und besonders vorzugsweise 1 bis 4 Kohlenstoffatomen steht , wobei R' ganz besonders vorzugsweise der Methylrest ist.

14. Verwendung nach einem der Ansprüche 9 bis 13, **dadurch gekennzeichnet, dass** das wasserlösliche Vinylpolymer mit mindestens einem Neutralisierungsmittel, welches unter Hydroxiden und / oder Calcium-, Magnesium-, Barium-, Lithiumoxiden, unter Natrium-, Kalium- oder Ammoniakhydroxiden, unter primären, sekundären und tertiären Aminen und Gemischen davon ausgewählt wurde, vollständig oder teilweise neutralisiert wird.

## Claims

1. A method for the manufacturing of a mixed powder containing at least one oxide and one metal hydroxide, **characterised:**
1) **in that** it comprises the steps of:
a) providing at least one metal oxide in the form of a dry powder, said metal oxide being chosen from a calcium and/or magnesium oxide
b) processing said powder with a polymer in the form of a solution and/or an aqueous emulsion, so that the metal oxide is partially hydrated in order to obtain the corresponding metal hydroxide so that the dry weight content of the metal hydroxide that is formed is less than 99%, preferentially 75%, very preferentially 50%, and extremely preferentially 10% of the total weight of the powder thus processed,
2) and **in that** said polymer is a water-soluble vinyl copolymer consisting of:
- at least one vinyl monomer chosen from (meth)acrylic acid, or from (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates hydroxyl methacrylates such as those of hydroxyethyl and hydroxypropyl, or from (meth)acrylamides, or from aromatic vinyl monomers such as preferentially styrene, α-methylstyrene, or from (meth)acrylic esters of cationic monomers, such as preferentially of [2- (methacryloyloxy) ethyl] trimethyl ammonium chloride or sulphate, of [2-(acryloyloxy) ethyl] trimethyl ammonium chloride or sulphate, of [3- (acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially in that the vinyl monomer is acrylic acid or methacrylic acid or mixtures of these monomers,
- and at least one non-ionic monomer of formula (I), or mixtures of several monomers of formula (I): 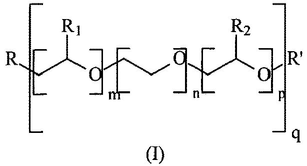 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing a polymerizable unsaturated group, preferentially belonging to the vinyl group as well as to the group of acrylic, methacrylic and maleic esters, as well as to the group of unsaturated urethanes such as acryl urethane, methacryl urethane, α-α'-dimethyl-isopropenyl-benzyl urethane, allyl urethane, as well as to the group of substituted or unsubstituted allylic or vinyl ethers, or else to the group of ethylenically unsaturated amides or imides, or else to the group consisting of acrylamide and methacrylamide,
R' represents hydrogen or a hydrocarbon radical with 1 to 40 carbon atoms, preferentially 1 to 12 carbon atoms, and very preferentially 1 to 4 carbon atoms, with an extreme preference for R' being the methyl radical.

2. The method according to claim 1, **characterised in that** said water-soluble vinyl copolymer used during step b) is constituted, expressed as a weight percentage of each of the constituents (the sum of all the constituents weight percentages being equal to 100%):
- from 1% to 20%, preferentially from 2% to 15%, very preferentially from 3% to 12% of at least one vinyl monomer chosen from (meth)acrylic acid, or from the (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates hydroxyl methacrylates such as those of hydroxyethyl and hydroxypropyl, or from (meth)acrylamides, or from aromatic vinyl monomers such as preferentially styrene, α-methylstyrene, or from (meth) acrylic esters of cationic monomers, such as preferentially of [2- (methacryloyloxy) ethyl] trimethyl ammonium chloride or sulphate, of [2-(acryloyloxy) ethyl] trimethyl ammonium chloride or sulphate, of [3- (acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially **in that** the vinyl monomer is acrylic acid or methacrylic acid or mixtures of these monomers,
- from 80% to 99%, preferentially from 85% to 98%, very preferentially from 88% to 97% of at least one non-ionic monomer of formula (I), or mixtures of several monomers of formula (I): 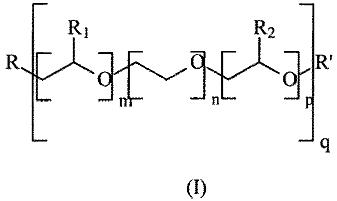 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing a polymerizable unsaturated group, preferentially belonging to the vinyl group as well as to the group of acrylic, methacrylic and maleic esters, as well as to the group of unsaturated urethanes such as acryl urethane, methacryl urethane, α-α'-dimethyl-isopropenyl-benzyl urethane, allyl urethane, as well as to the group of substituted or unsubstituted allylic or vinyl ethers, or else to the group of ethylenically unsaturated amides or imides, or else to the group consisting of acrylamide and methacrylamide,
- R' represents hydrogen or a hydrocarbon radical with 1 to 40 carbon atoms, preferentially 1 to 12 carbon atoms, and very preferentially 1 to 4 carbon atoms, with an extreme preference for R' being the methyl radical.

3. The method according to one of claims 1 to 2, **characterised in that** the water-soluble vinyl copolymer used during step b) is totally or partially neutralised with at least one neutralisation agent, chosen from among the hydroxides and/or the oxides of calcium, of magnesium, of barium, of lithium, among the hydroxides of sodium, of potassium, or ammonia, among the primary, secondary and tertiary amines, and mixtures thereof.

4. The method according to one of claims 1 to 3, **characterised in that** a thickening agent is used during and/or after step b) of said method.

5. Mixed powders containing at least one metal oxide chosen from calcium and/or magnesium oxides and at least the corresponding metal hydroxide, **characterised:**
1) **in that** they have a dry weight content of metal hydroxide of less than 99%, preferentially less than 75%, very preferentially less than 50%, and extremely preferentially less than 10% of their total weight,
2) and **in that** they contain a polymer which is a water-soluble vinyl copolymer consisting of:
- at least one vinyl monomer chosen from among (meth)acrylic acid, or from (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates, hydroxyl methacrylates such as those of hydroxyethyl and hydroxypropyl, or from (meth)acrylamides, or from aromatic vinyl monomers such as preferentially styrene, α-methylstyrene, or from (meth)acrylic esters of cationic monomers, such as preferentially of [2- (methacryloyloxy) ethyl] trimethyl ammonium chloride or sulphate, of [2-(acryloyloxy) ethyl] trimethyl ammonium chloride or sulphate, of [3- (acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially in that the vinyl monomer is acrylic acid or methacrylic acid or mixtures of these monomers,
- and at least one non-ionic monomer of formula (I), or mixtures of several monomers of formula (I): 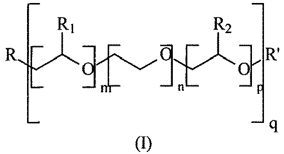 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing a polymerizable unsaturated group, preferentially belonging to the vinyl group as well as to the group of acrylic, methacrylic and maleic esters, as well as to the group of unsaturated urethanes such as acryl urethane, methacryl urethane, α-α'-dimethyl-isopropenyl-benzyl urethane, allyl urethane, as well as to the group of substituted or unsubstituted allylic or vinyl ethers, or else to the group of ethylenically unsaturated amides or imides, or else to the group consisting of acrylamide and methacrylamide,
R' represents hydrogen or a hydrocarbon radical with 1 to 40 carbon atoms, preferentially 1 to 12 carbon atoms, and very preferentially 1 to 4 carbon atoms, with an extreme preference for R' being the methyl radical.

6. The mixed powders according to claim 5, **characterised in that** said water-soluble vinyl copolymer is constituted, expressed as a weight percentage of each of the constituents (the sum of all the constituents weight percentages being equal to 100%):
- from 1% to 20%, preferentially from 2% to 15%, very preferentially from 3% to 12% of at least one vinyl monomer chosen from (meth)acrylic acid, or from the (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates, hydroxyl methacrylates such as those of hydroxyethyl and hydroxypropyl, or from among (meth)acrylamides, or from aromatic vinyl monomers such as preferentially styrene, α-methylstyrene, or from (meth)acrylic esters of cationic monomers, such as preferentially of [2-(methacryloyloxy) ethyl] trimethyl ammonium chloride or sulphate, of [2-(acryloyloxy) ethyl] trimethyl ammonium chloride or sulphate, of [3-(acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially **in that** the vinyl monomer is acrylic acid or methacrylic acid or mixtures of these monomers,
- from 80% to 99%, preferentially from 85% to 98%, very preferentially from 88% to 97% of at least one non-ionic monomer of formula (I), or mixtures of several monomers of formula (I): 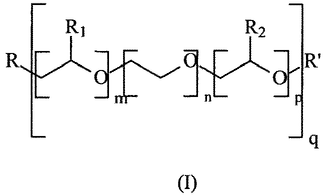 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing a polymerizable unsaturated group, preferentially belonging to the vinyl group as well as to the group of acrylic, methacrylic and maleic esters, as well as to the group of unsaturated urethanes such as acryl urethane, methacryl urethane, α-α'-dimethyl-isopropenyl-benzyl urethane, allyl urethane, as well as to the group of substituted or unsubstituted allylic or vinyl ethers, or else to the group of ethylenically unsaturated amides or imides, or else to the group consisting of acrylamide and methacrylamide,
- R' represents hydrogen or a hydrocarbon radical with 1 to 40 carbon atoms, preferentially 1 to 12 carbon atoms, and very preferentially 1 to 4 carbon atoms, with an extreme preference for R' being the methyl radical.

7. The mixed powders according to one of claims 5 to 6, **characterised in that** the water-soluble vinyl copolymer is totally or partially neutralised with at least one neutralisation agent, chosen from the hydroxides and/or oxides of calcium, of magnesium, of barium, of lithium, from the hydroxides of sodium, of potassium, or ammonia, from the primary, secondary and tertiary amines, and mixtures thereof.

8. An use of mixed powders according to one of claims 5 to 7, for producing an aqueous dispersion of at least one metal hydroxide, chosen from the hydroxides of calcium, magnesium and mixtures thereof.

9. The use of mixed powders containing at least one metal oxide chosen from calcium and/or magnesium oxides and at least the corresponding metal hydroxide **characterised:**
1) **in that** they have a dry weight content of metal hydroxide of less than 99%, preferentially less than 75%, very preferentially less than 50%, and extremely preferentially less than 10% of their total weight,
2) and **in that** they contain a polymer which is a water-soluble copolymer containing at least one vinyl monomer defined according to one of claims 1 to 3, for treating domestic or industrial effluents, especially gaseous effluents such as acid fumes.

10. The use of mixed powders containing at least one metal oxide chosen from calcium and/or magnesium oxides and at least the corresponding metal hydroxide **characterised:**
1) **in that** they have a dry weight content of metal hydroxide of less than 99%, preferentially less than 75%, very preferentially less than 50%, and extremely preferentially less than 10% of their total weight,
2) and **in that** they contain a polymer which is a water-soluble copolymer containing at least one vinyl monomer defined according to one of claims 1 to 3, as a soil conditioning product.

11. The use according to any one of claims 9 and 10, **characterised in that** the water-soluble vinyl polymer is a water-soluble polymer containing at least one vinyl monomer chosen from (meth)acrylic acid, or from the (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates, hydroxyl methacrylates such as those of hydroxyethyl and hydroxypropyl, or from (meth)acrylamides, or from aromatic vinyl monomers such as preferentially styrene, α-methylstyrene, or from (meth)acrylic esters of cationic monomers, such as preferentially of [2- (methacryloyloxy) ethyl] trimethyl ammonium chloride or sulphate, of [2- (acryloyloxy) ethyl] trimethyl ammonium chloride or sulphate, of [3- (acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially **in that** the vinyl monomer is acrylic acid or methacrylic acid or mixtures of these monomers,

12. The use according to any one of claims 9 to 11, **characterised in that** said water-soluble vinyl polymer is a water-soluble vinyl copolymer consisting of:
- chosen from (meth)acrylic acid, or from (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates, hydroxyl methacrylates such as those of hydroxyethyl and hydroxypropyl, or from (meth)acrylamides, or from aromatic vinyl monomers such as preferentially styrene, α-methyl styrene, or from (meth) acrylic esters of cationic monomers, such as preferentially of [2- (methacryloyloxy) ethyl] trimethyl ammonium chloride or sulphate, of [2- (acryloyloxy) ethyl] trimethyl ammonium chloride or sulphate, of [3- (acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially **in that** the vinyl monomer is acrylic acid or methacrylic acid or mixtures of these monomers,
- and at least one non-ionic monomer of formula (I), or mixtures of several monomers of formula (I): 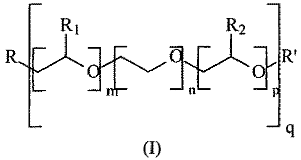 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing a polymerizable unsaturated group, preferentially belonging to the vinyl group as well as to the group of acrylic, methacrylic and maleic esters, as well as to the group of unsaturated urethanes such as acryl urethane, methacryl urethane, α-α'-dimethyl-isopropenyl-benzyl urethane, allyl urethane, as well as to the group of substituted or unsubstituted allylic or vinyl ethers, or else to the group of ethylenically unsaturated amides or imides, or else to the group consisting of acrylamide and methacrylamide,
- R' represents hydrogen or a hydrocarbon radical with 1 to 40 carbon atoms, preferentially 1 to 12 carbon atoms, and very preferentially 1 to 4 carbon atoms, with an extreme preference for R' being the methyl radical.

13. The use according to claim 12, **characterised in that** said water-soluble vinyl copolymer is constituted, expressed as a weight percentage of each of the constituents (the sum of all the constituents weight percentages being equal to 100%):
- from 1% to 20%, preferentially from 2% to 15%, very preferentially from 3% to 12% of at least one vinyl monomer chosen from (meth)acrylic acid, or from the (meth)acrylic esters, such as preferentially acrylates and methacrylates with from 1 to 20 carbon atoms in their ester radical, such as very preferentially methyl, ethyl, isopropyl, n-propyl, isobutyl, n-butyl, tert-butyl, 2-ethylhexyl acrylates, methyl, ethyl methacrylates, hydroxyl methacrylates such as those of hydroxyethyl and hydroxypropyl, or from (meth)acrylamides, or aromatic vinyl monomers such as preferentially styrene, α-methylstyrene, or from (meth)acrylic esters of cationic monomers, such as preferentially of [2- (methacryloyloxy) ethyl] trimethyl ammonium chloride or sulphate, of [2- (acryloyloxy) ethyl] trimethyl ammonium chloride or sulphate, of [3- (acrylamido) propyl] trimethyl ammonium chloride or sulphate, of dimethyl diallyl ammonium chloride or sulphate, of [3- (methacrylamido) propyl] trimethyl ammonium chloride or sulphate, or from the mixtures of these monomers, and preferentially **in that** the vinyl monomer is acrylic acid or methacrylic acid or mixtures of these monomers,
- from 80% to 99%, preferentially from 85% to 98%, very preferentially from 88% to 97% of at least one non-ionic monomer of formula (I), or mixtures of several monomers of formula (I): 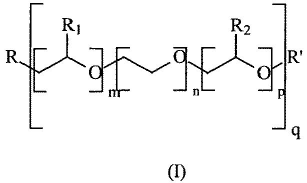 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing a polymerizable unsaturated group, preferentially belonging to the vinyl group as well as to the group of acrylic, methacrylic and maleic esters, as well as to the group of unsaturated urethanes such as acryl urethane, methacryl urethane, α-α'-dimethyl-isopropenyl-benzyl urethane, allyl urethane, as well as to the group of substituted or unsubstituted allylic or vinyl ethers, or else to the group of ethylenically unsaturated amides or imides, or else to the group consisting of acrylamide and methacrylamide,
- R' represents hydrogen or a hydrocarbon radical with 1 to 40 carbon atoms, preferentially 1 to 12 carbon atoms, and very preferentially 1 to 4 carbon atoms, with an extreme preference for R' being the methyl radical.

14. The use according to any one of claims 9 to 13, **characterised in that** the water-soluble vinyl polymer is totally or partially neutralised with at least one neutralisation agent, chosen from the hydroxides and/or oxides of calcium, of magnesium, of barium, of lithium, from the hydroxides of sodium, of potassium, or ammonia, from the primary, secondary and tertiary amines, and mixtures thereof.
